(19) Europäisches Patentamt
European Patent Office
Office européen des brevets

(11) Veröffentlichungsnummer: **0 019 831**
**B1**

(12) # EUROPÄISCHE PATENTSCHRIFT

(45) Veröffentlichungstag der Patentschrift: **13.04.83**

(51) Int. Cl.³: **C 09 B 67/48,** C 09 B 29/085, C 09 B 67/10

(21) Anmeldenummer: **80102776.4**

(22) Anmeldetag: **20.05.80**

(54) **Färbestabile kristallographische Modifikation eines Monoazofarbstoffs, dessen Herstellung und Verwendung zum Färben von Fasermaterialien.**

(30) Priorität: **25.05.79 DE 2921210**

(43) Veröffentlichungstag der Anmeldung: **10.12.80 Patentblatt 80/25**

(45) Bekanntmachung des Hinweises auf die Patenterteilung: **13.04.83 Patentblatt 83/15**

(84) Benannte Vertragsstaaten: **BE CH DE FR GB LI**

(56) Entgegenhaltungen:
**DE-A-1 619 535**
**DE-A-2 536 052**
**FR-A-2 322 175**
**GB-A-852 396**
**US-A-2 007 382**
**US-A-3 407 189**
**CHEMICAL ABSTRACTS, Vol. 90, Nr. 16, April 1979, Ref. Nr. 123 029 g, Seite 74 COLUMBUS OHIO (US) G. V. SAMOILOVA et al.: »Effect on crystal structure on the coloristic properties of vat and disperse dyes«**

(73) Patentinhaber: **HOECHST AKTIENGESELLSCHAFT, Postfach 80 03 20, D-6230 Frankfurt/Main 80 (DE)**

(72) Erfinder: **Opitz, Konrad, Dr., Schwedenstrasse 22, D-6237 Liederbach (DE)**
Erfinder: **Schickfluss, Rudolf, Dr., Luisenstrasse 37, D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 019 831 B1

BUNDESDRUCKEREI BERLIN

# Färbestabile kristallographische Modifikation eines Monoazofarbstoffs, dessen Herstellung und Verwendung zum Färben von Fasermaterialien

Die vorliegende Erfindung betrifft eine neue färbestabile kristallographische Modifikation (»β-Modifikation«) des Farbstoffes der Formel

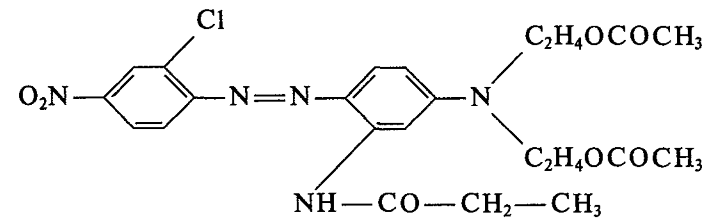

die das in Fig. 1 gezeigte Röntgenbeugungsdiagramm mit den charakteristischen Reflexen bei folgenden Glanzwinkeln (Θ) ($CuK_\alpha$-Strahlung) und den angegebenen Intensitäten hat:

| | (Θ) | | | | | | | |
|---|---|---|---|---|---|---|---|---|
| | 3,71 | 6,62 | 7,85 | 8,6 | 9,43 | 10,51 | 11,8 | 12,57 |
| relative Intensität | 67 | 44 | 34 | 36 | 60 | 60 | 46 | 100 |

Der Farbstoff der vorstehend genannten Formel wird durch Diazotierung von 2-Chlor-4-nitro-anilin in wäßriger Salzsäure und durch Kupplung der so erhaltenen Diazoniumverbindung mit in verdünnter Salzsäure gelöstem 3-(N,N-Diacetoxäthyl)amino-propionsäureanilid erhalten. Dabei fällt die färbeinstabile α-Modifikation an, die unter den in der Praxis des Färbens auftretenden Bedingungen keine genügende Stabilität besitzt.

Die α-Modifikation weist das in Fig. 2 gezeigte Röntgenbeugungsdiagramm mit den charakteristischen Reflexen bei folgenden Glanzwinkeln Θ ($CuK_\alpha$-Strahlung) mit den angegebenen Intensitäten auf:

| | [Θ] | | | | | | | |
|---|---|---|---|---|---|---|---|---|
| | 2,29 | 3,26 | 4,85 | 9,78 | 10,52 | 11,1 | 11,7 | 13,2 |
| relative Intensität | 50 | 58 | 71 | 49 | 64 | 55 | 73 | 100 |

Unter Färbebedingungen, wie hoher Temperatur und in Gegenwart von Färbereihilfsmitteln, ändert sich die färbestabile β-Modifikation hinsichtlich Kristallgröße und Kristallform praktisch nicht mehr, so daß die färberischen Eigenschaften und die Stabilität der Dispersion im Gegensatz zur färbeinstabilen α-Modifikation dabei nicht beeinträchtigt werden. So wird beobachtet, daß die färbestabile β-Modifikation besser lagerfähige Flüssigeinstellungen ergibt.

Die neue färbestabile β-Modifikation kann durch zweistündiges oder längeres Erhitzen, gegebenenfalls unter Druck, einer wäßrigen Suspension der α-Modifikation auf Temperaturen von 60—130° C, erhalten werden.

Die Umwandlung in die färbestabile β-Modifikation findet auch durch Erhitzen der α-Modifikation in wäßriger Suspension unter Zusatz von wasserlöslichen organischen Lösungsmitteln, wie beispielsweise Äthanol oder Glykol, statt.

Man erhält die färbestabile β-Modifikation ferner durch Erhitzen einer wäßrigen Suspension der α-Modifikation unter Zusatz von anionischen, kationischen oder nichtionischen oberflächenaktiven Verbindungen bei Temperaturen von etwa 80—100° C. Hierfür geeignete oberflächenaktive Verbindungen sind beispielsweise diisobutylnaphthalinsulfonsaures Natrium, das Anlagerungsprodukte von 25 Mol Äthylenoxid an 1 Mol Stearylalkohol, ein Gemisch aus Alkyldimethylbenzylammoniumchloriden, ein Fettsäurepolyglykolsäureester oder der tertiäre Phosphorsäureester des Anlagerungsproduktes von 2 Mol Äthylenoxid an 1 Mol Laurylalkohol.

Schließlich kann die färbestabile β-Modifikation dadurch erhalten werden, daß man die α-Modifikation unter Zusatz üblicher Dispergiermittel, wie beispielsweise Polyvinylsulfonaten, Kondensationsprodukten aus Naphthalinsulfonsäure und Formaldehyd oder aus Phenol, Formaldehyd und Natriumbisulfit, Alkalisalzen von Ligninsulfonaten oder Sulfitcelluloseablauge, bei Temperaturen von etwa 60—90° C feinverteilt.

Die färbestabile β-Modifikation wird beispielsweise durch Filtrieren von der flüssigen Phase

abgetrennt und einem bekannten Finish unter Zusatz von Dispergiermitteln, wie beispielsweise Polyvinylsulfonaten, Kondensationsprodukten aus Naphthalinsulfonsäure und Formaldehyd oder aus Phenol, Formaldehyd und Natriumbisulfit, Alkalisalzen von Ligninsulfonaten oder Sulfitcelluloseablauge, bei den üblichen Temperaturen unterworfen. Für die Feinverteilung eignen sich die üblichen Vorrichtungen, wie beispielsweise Kugelmühlen oder Sandmühlen.

Die Präparationen können weitere Zusätze enthalten, wie zum Beispiel Konservierungsmittel (bei Flüssig-Einstellungen), Entstaubungsmittel, Netzmittel, Antischaummittel oder Frostschutzmittel (bei Flüssig-Einstellungen).

Die auf diese Weise erhaltenen flüssigen oder pulverförmigen Präparationen der färbestabilen $\beta$-Modifikation eignen sich im Gegensatz zu vergleichbaren Präparationen der $\alpha$-Modifikation uneingeschränkt zum Färben von Textilmaterialien aus Cellulosefasern, synthetischen linearen Polyestern, wie Polyäthylenglykolterephthalat oder Mischgeweben solcher Polyester mit Wolle oder Zellwolle, bei Temperaturen zwischen 100 und 200° C.

Die Präparationen, welche die färbestabile $\beta$-Modifikation enthalten, flocken in wäßrigem Medium und bei Einwirkung hoher Temperaturen nicht aus, was besonders für die Färbung von Wickelkörpern, beispielsweise Kreuzspulen, von Bedeutung ist. Die wesentlich bessere Eignung der die färbestabile $\beta$-Modifikation enthaltenden Präparationen für die Praxis machen sich bereits in den verschiedensten Färbereitests durch deutlich überlegene Prüfergebnisse bemerkbar.

Beispielsweise ist dies beim Heat-Stability-Test, der ein Kriterium für die Flottenstabilität ist, und im Praxi-Test auf Mischgeweben wie solchen aus Polyesterfasern und Zellwolle der Fall. Der Praxi-Test gestattet es, die Eignung von Dispersionsfarbstoffpräparationen für das Färben von Wickelkörpern mit geringem Aufwand praxisgerecht zu prüfen.

In den folgenden Beispielen sind Teile und Prozente, wenn nicht anders vermerkt, Gewichtsteile und Gewichtsprozente.

## Beispiel 1

100 Teile des durch Diazotieren von 2-Chlor-4-nitroanilin in wäßriger Salzsäure und durch Kuppeln der so erhaltenen Diazoniumverbindung mit in verdünnter Salzsäure gelöstem 3-(N,N-Diacetoxäthyl)-amino-propionsäureanilid hergestellten Farbstoffs ($\alpha$-Modifikation) werden in wäßriger Suspension nach Einstellen des pH-Werts auf etwa 4 vier Stunden auf 80° C erhitzt.

Dabei wandelt sich die färbeinstabile $\alpha$-Modifikation in die färbestabile $\beta$-Modifikation um. Der Farbstoff wird abfiltriert und mit 110 Teilen eines Kondensationsproduktes aus Kresol, Formaldehyd und Natriumbisulfit, 20 Teilen des Natriumsalzes von Diisobutylnaphthalinsulfonsäure und Wasser in einer Perlmühle nicht über 50° C gemahlen bis die Feinverteilung zufriedenstellend ist. Anschließend wird die Präparation in einer Sprühapparatur getrocknet.

Nach dem Trocknen wird mit dinaphthylmethansulfonsaurem Natrium auf die gewünschte Stärke an Reinfarbstoff eingestellt. Das so erhaltene Pulver genügt allen technischen Anforderungen.

## Beispiel 2

100 Teile des gemäß Beispiel 1 erhaltenen Monoazofarbstoffes ($\alpha$-Modifikation) werden nach Einstellen des pH-Werts auf etwa 4 durch dreistündiges Erhitzen einer wäßrigen Suspension auf 90° C in die färbestabile $\beta$-Modifikation übergeführt. Der wasserfeuchte Nutschkuchen wird mit 60 Teilen eines Kondensationsproduktes aus Kresol, Formaldehyd und Natriumbisulfit, 60 Teilen des Natriumsalzes eines Ligninsulfonats und 20 Teilen des Natriumsalzes von diisobutylnaphthalinsulfonsaurem Natrium, wie in Beispiel 1 beschrieben, gemahlen, getrocknet und eingestellt.

Die so erhaltene pulverförmige Präparation genügt allen Anforderungen, die in der Praxis gestellt werden.

## Beispiel 3

100 Teile des durch Diazotieren von 2-Chlor-4-nitroanilin in wäßriger Salzsäure und durch Kuppeln der so erhaltenen Diazoniumverbindung mit in verdünnter Salzsäure gelöstem 3-(N,N-Diacetoxäthyl) amino-propionsäureanilid erhaltenen wasserfeuchten Monoazofarbstoffs ($\alpha$-Modifikation) werden mit 110 Teilen eines Kondensationsproduktes aus Kresol, Formaldehyd und Natriumbisulfit und 20 Teilen des Natriumsalzes von Diisobutylnaphthalinsulfonsäure und Wasser in einer Perlmühle bei 75° C—80° C gemahlen, bis die Feinverteilung zufriedenstellend ist. Dabei wird die färbeinstabile $\alpha$-Modifikation in die färbestabile $\beta$-Modifikation umgewandelt. Die Präparation wird in einer Sprühapparatur getrocknet und, wie in Beispiel 1 beschrieben, auf die gewünschte Stärke an Reinfarbstoff eingestellt.

## Beispiel 4

100 Teile des gemäß Beispiel 3 erhaltenen Monoazofarbstoffs ($\alpha$-Modifikation) werden in einer wäßrigen Suspension, die 10% Glykol enthält, vier Stunden bei 70 bis 80°C erhitzt und nach dem Erkalten abgesaugt.

Der wasserfeuchte Nutschkuchen ($\beta$-Modifikation) wird mit 100 Teilen des Natriumsalzes einer Ligninsulfonsäure angeteigt und in einer Perlmühle unter Kühlung bis zur genügenden Feinverteilung gemahlen. Man erhält eine flüssige Farbstoffpräparation von einwandfreien färberischen Eigenschaften und guter Lager-Stabilität.

## Beispiel 5

100 Teile des gemäß Beispiel 3 erhaltenen Monoazofarbstoffs werden in einer wäßrigen Suspension, die 0,5 Vol.% tertiären organischen Phosphorsäureester des Umsetzungsproduktes von Laurylalkohol mit 2 Mol Äthylenoxid enthält, drei Stunden bei 90°C gerührt. Der abfiltrierte Farbstoff wird, wie in Beispiel 1 beschrieben, gemahlen.

Man erhält eine hervorragend lagerstabile flüssige Farbstoffpräparation mit einwandfreien färberischen Eigenschaften.

**Patentansprüche**

1. Die färbestabile Modifikation ($\beta$-Modifikation) des Farbstoffs der Formel

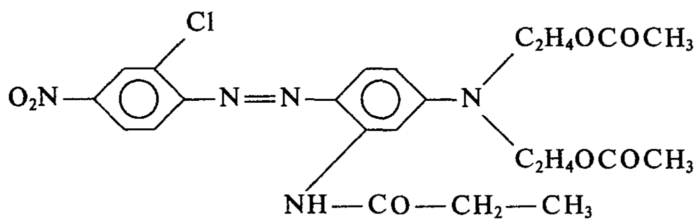

gekennzeichnet durch das in Fig. 1 gezeigte Röntgenbeugungsdiagramm mit den charakteristischen Reflexen bei den nachstehenden Glanzwinkeln $\Theta$ ($CuK_\alpha$-Stahlung) und den angegebenen relativen Intensitäten:

| | $\Theta$ | | | | | | | |
|---|---|---|---|---|---|---|---|---|
| | 3,71 | 6,62 | 7,85 | 8,6 | 9,43 | 10,51 | 11,8 | 12,57 |
| relative Intensität | 67 | 44 | 34 | 36 | 60 | 60 | 46 | 100 |

2. Verfahren zur Herstellung der färbestabilen Modifikation ($\beta$-Modifikation) des Farbstoffs der Formel

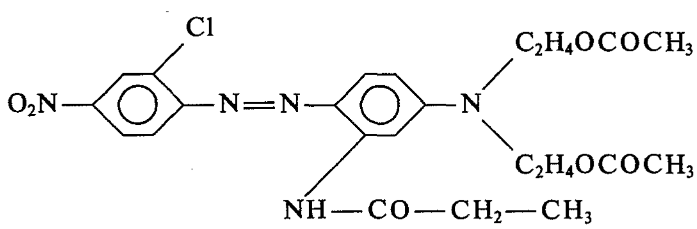

welche das in Fig. 1 gezeigte Röntgenbeugungsdiagramm mit den charakteristischen Reflexen bei den nachstehend angegebenen Glanzwinkeln $\Theta$ und den angegebenen relativen Intensitäten:

| | $\Theta$ | | | | | | | |
|---|---|---|---|---|---|---|---|---|
| | 3,71 | 6,62 | 7,85 | 8,6 | 9,43 | 10,51 | 11,8 | 12,57 |
| relative Intensität | 67 | 44 | 34 | 36 | 60 | 60 | 46 | 100 |

aufweist, dadurch gekennzeichnet, daß man den Farbstoff der genannten Formel der färbeinstabilen $\alpha$-Modifikation, welche durch das Röntgenbeugungsdiagramm der Fig. 2 charakterisiert ist,

a) in wäßriger Suspension auf Temperaturen von 60—130°C erhitzt oder
b) in wäßriger Suspension in Gegenwart von Dispergiermitteln bei etwa 60 bis 90°C feinverteilt.

3. Verfahren nach Anspruch 2a, dadurch gekennzeichnet, daß man unter Zusatz von wasserlöslichen organischen Lösungsmitteln erhitzt.

4. Verfahren nach Anspruch 2a, dadurch gekennzeichnet, daß man unter Zusatz von anionischen, kationischen oder nichtionischen oberflächenaktiven Verbindungen auf Temperaturen von etwa 80 bis 100°C erhitzt.

5. Verwendung der in Anspruch 1 genannten färbestabilen Modifikation ($\beta$-Modifikation) zum Färben von Fasermaterialien aus Celluloseestern oder synthetischen linearen Polyestern oder Mischgeweben solcher Polyester mit Wolle oder Zellwolle.

**Claims**

1. The modification $\beta$ being stable under dyeing conditions of the dyestuff of the formula

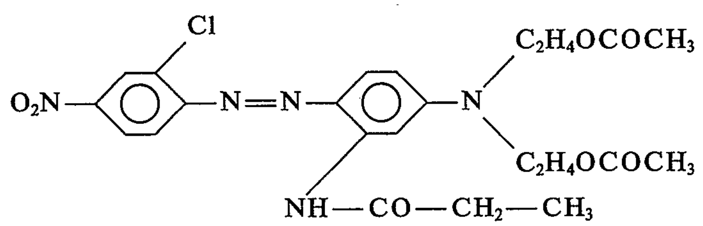

being characterized by an X-ray diffraction pattern as shown in Fig. 1 with characteristic reflexes at the following glance angles $\Theta$ ($CuK_\alpha$-radiation) with the relative intensities:

| | $\Theta$ | | | | | | | |
|---|---|---|---|---|---|---|---|---|
| | 3.71 | 6.62 | 7.85 | 8.6 | 9.43 | 10.51 | 11.8 | 12.57 |
| relative intensity | 67 | 44 | 34 | 36 | 60 | 60 | 46 | 100 |

2. Process for the manufacture of the $\beta$-modification being stable under dyeing conditions of the dyestuff of the formula

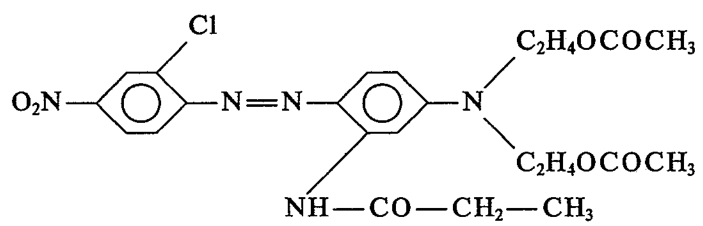

being characterized by an X-ray diffraction pattern as shown in Fig. 1 with characteristic reflexes at the following glance angles $\Theta$ with the relative intensities:

| | θ | | | | | | | |
|---|---|---|---|---|---|---|---|---|
| | 3.71 | 6.62 | 7.85 | 8.6 | 9.43 | 10.51 | 11.8 | 12.57 |
| relative intensity | 67 | 44 | 34 | 36 | 60 | 60 | 46 | 100 |

wherein the dyestuff of the said formula of the α-modification being unstable under dyeing conditions being characterized by an X-ray diffraction pattern as shown in Fig. 2 is

a) heated in aqueous suspension at a temperature from 60° C to 130° C, or
b) finely divided in aqueous suspension at a temperature from about 60° C to 90° C in the presence of a dispersing agent.

3. Process as claimed in claim 2a, wherein the heating is performed under the addition of a water-soluble organic solvent.

4. Process as claimed in claim 2a, wherein the heating is performed under the addition of anionic, cationic or nonionic surface active agents to temperatures from abaut 80° C to 100° C.

5. Use of the modification being stable under dyeing conditions (β-modification) as indicated in claim 1 for the dyeing of fibrous materials of cellulose esters or synthetic linear polyesters or mixed fabrics of such polyester with wool or spun rayon.

**Revendications**

1. Modification stable à la teinture (modification β) du colorant de formule:

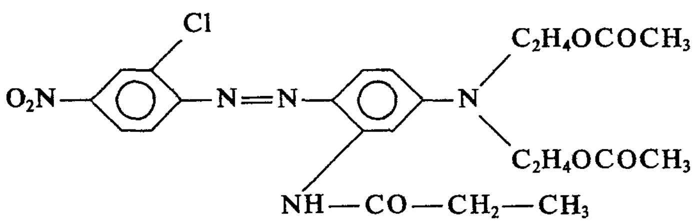

modification caractérisée par le diagramme de diffraction des rayons X représenté sur la fig. 1 avec les réflexions caractéristiques aux angles de Bragg Θ suivants (pour la raie $K_\alpha$ du cuivre) et les intensités relatives indiquées:

| | Angle θ | | | | | | | |
|---|---|---|---|---|---|---|---|---|
| | 3,71 | 6,62 | 7,85 | 8,6 | 9,43 | 10,51 | 11,8 | 12,57 |
| Intensité relative | 67 | 44 | 34 | 36 | 60 | 80 | 46 | 100 |

2. Procédé de préparation de la modification stable à la teinture (modification β) du colorant de formule:

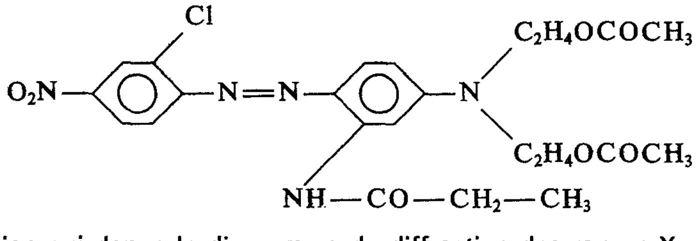

modification qui donne le diagramme de diffraction des rayons X représenté sur la fig. 1 avec les réflexions caractéristiques aux angles de Bragg Θ indiqués ci-dessous et les intensités relatives indiquées:

| | Angle $\theta$ | | | | | | | |
|---|---|---|---|---|---|---|---|---|
| | 3,71 | 6,62 | 7,85 | 8,6 | 9,43 | 10,51 | 11,8 | 12,57 |
| Intensité relative | 67 | 44 | 34 | 36 | 60 | 60 | 46 | 100 |

procédé caractérisé en ce qu'on divise finement le colorant répondant à la formule précédente et se trouvant sous la forme de la modification $\alpha$, instable à la teinture, donnant le diagramme de diffraction des rayons X représenté sur la fig. 2,

a) en suspension aqueuse à des températures de 60 à 130° C ou
b) en suspension aqueuse en présence de dispersants à des températures d'environ 60 à 90° C.

3. Procédé selon la revendication 2a), caractérisé en ce qu'on chauffe en présence de solvants organiques solubles dans l'eau.
4. Procédé selon la revendication 2a, caractérisé en ce qu'on chauffe à des températures d'environ 80 à 100° C en présence de surfactifs anioniques, cationiques ou non ioniques.
5. Application de la modification stable à la teinture (modification $\beta$) selon la revendication 1 à la teinture de matières fibreuses constituées d'esters cellulosiques ou de polyesters linéaires synthétiques, ou de tissus mixtes constitués de polyesters de ce genre ainsi que de laine ou de fibranne cellulosique.

FIG. 1

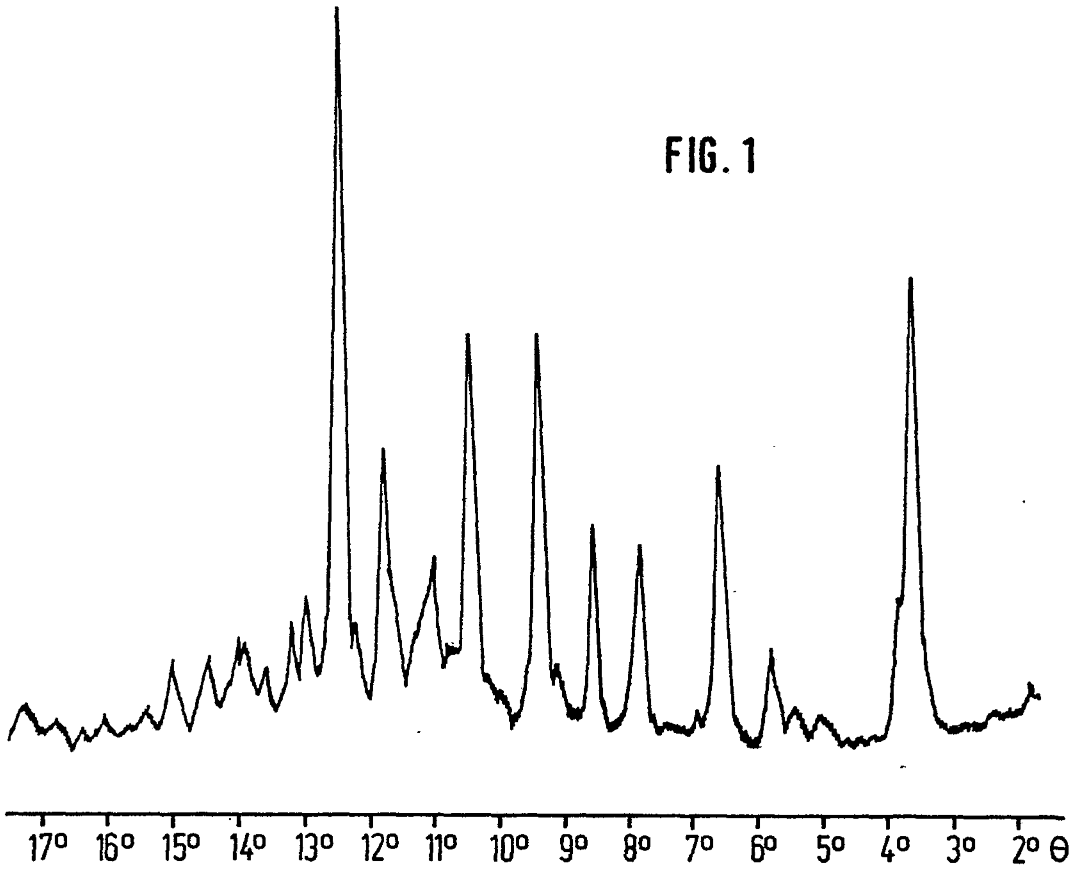
17° 16° 15° 14° 13° 12° 11° 10° 9° 8° 7° 6° 5° 4° 3° 2° Θ

FIG. 2

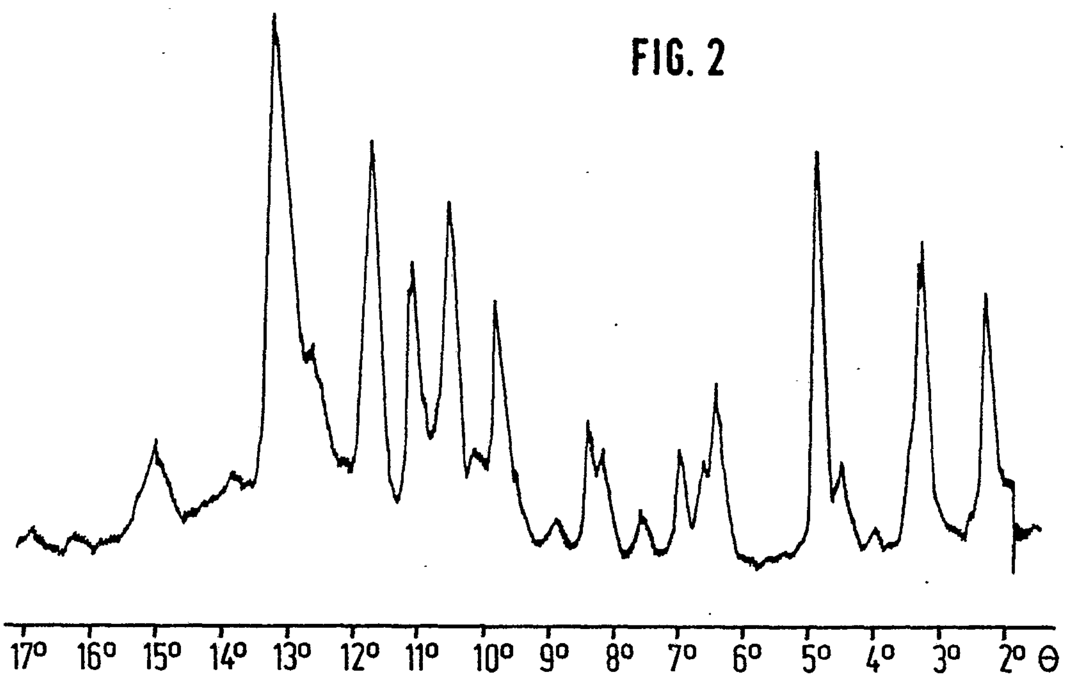
17° 16° 15° 14° 13° 12° 11° 10° 9° 8° 7° 6° 5° 4° 3° 2° Θ